# EUROPÄISCHE PATENTSCHRIFT

(11) **EP 1 219 581 B1**
(45) Veröffentlichungstag und Bekanntmachung des Hinweises auf die Patenterteilung: **11.05.2005**
(21) Anmeldenummer: 01129668.8
(22) Anmeldetag: 13.12.2001
(51) Int. Cl.: C05D 5/00, C05G 5/00, B01J 2/28, C05G 3/00

(54) **Granulierung von Mineraldüngern unter Zugabe von Granuierhilfsmitteln**
Granulation of mineral fertilizers by adding a granulating aid
Granulation d'engrais minéraux par addition d'un agent de granulation

(30) Priorität: 29.12.2000 DE 10065699
(43) Veröffentlichungstag der Anmeldung: 03.07.2002
(73) Patentinhaber: K+S KALI GmbH, 34131 Kassel (DE)
(72) Erfinder: Wolf, Frank, Dr., 36277 Schenklengsfeld (DE); Hoche, Antje, 36404 Vacha (DE); Waldmann, Ludger, Dr., 34302 Guxhagen (DE)

(56) Entgegenhaltungen:
- DE-A- 10 008 738
- DE-C- 967 976
- DE-C- 4 303 985
- US-A- 5 019 148

## Beschreibung

Die Erfindung bezieht sich auf die Granulierung von Düngemitteln unter Zusatz von Granulierhilfsmitteln.

Feinzerteilte Mineraldünger neigen zum Stauben während der Handhabung, so dass diese vom Anwender häufig in granulierter Form gewünscht werden.

Feinzerteilte Feststoffe können in Gegenwart eines Hilfsmittels, das Wasser oder eine wässrige Lösung/Suspension eines Feststoffes sein kann, granuliert werden.
Unter Granulierung sind die Verfahren der Kompaktierung, Aufbaugranulierung, Pelletierung und andere verwandte Verfahren zu verstehen. Als Granulierhilfsmittel können flüssige oder feste Stoffe dienen, durch deren Haftkräfte ein Zusammenhalten der Partikel bewirkt wird. Zwingend notwendig wird deren Verwendung, wenn die Granulierung der Partikel ohne Granulierhilfsmittel zu keinem ausreichend stabilen Granulat führt. Bekannte Granulierhilfsmittel sind z.B. Gelatine, Stärke, Ligninsulfonate, Kalk und Melasse, die zum Teil eine klebende Wirkung entfalten. Die verschiedenen Stoffe beeinflussen die Eigenschaften der Agglomerate. Zu diesen Eigenschaften gehören u. a. die mechanische Festigkeit (Abrieb, Härte), die hygroskopische Beständigkeit und die Staubneigung.

Die Erfindung betrifft insbesondere die Granulierung von Kieserit (MgSO₄*H₂O). MgSO₄ stellt in Form von Kieserit (Magnesiumsulfat-monohydrat) einen wegen seiner Wasserlöslichkeit besonders schnell wirksamen Dünger für an Mg verarmte Böden dar und ist anderen Magnesiumträgern auf alkalischen Böden (pH > 7) deutlich überlegen. Neben dem hohen pflanzenverfügbaren Wertstoffgehalt an Mg ist auch der Schwefelgehalt besonders für schwefelarme Böden von zusätzlicher Bedeutung. Kieserit wird bei der Aufarbeitung der natürlichen Hartsalzvorkommen als kristalliner, staubarmer und somit umweltfreundlich auszubringender Dünger gewonnen, muss jedoch für die Anwendung moderner Ausbringgeräte durch Pressen oder Aufbau(Roll-)granulierung in eine granulierte Form mit einem besonders für die Mischung in Bulk-Blends geeigneten engen Komspektrum von 2 - 4 mm überführt werden. Obschon in DE 31 48 404 die Möglichkeit zur Kompaktierung von Kieserit unter Zusatz von Natriumsulfat oder -carbonat, Alkalisilikaten, -boraten und -phosphaten als Granulierhilfsmittel beschrieben wird, ist das Verpressen von Kieserit erschwert, da sich dieser unter den üblichen Bedingungen mangels Verschiebbarkeit seiner Kristallgitterebenen nicht plastisch verformen lässt.

Der Einsatz von Rollverfahren ist besonders an die Wahl eines geeigneten Granulierhilfsmittels gebunden. Außerdem sollte der Feuchtigkeitsgehalt des Granulats möglichst gering sein, um einen hohen Gehalt an wasserlöslichem MgO, eine schnelle Ausreifung des Granulats und eine gute Verträglichkeit mit hygroskopischen Komponenten in Bulk-Blends zu gewährleisten. Es sind eine Reihe von Patenten zur Granulierung von Kieserit bekannt.

In DE 35 41 184 wird die Granulierung von Kieserit mit in Wasser unlöslichen Düngestoffen, wie z.B. Schlacken- und/oder Gesteinsmehlen beschrieben, was bei den benötigten Anwendungsmengen jedoch zu einer erheblichen Minderung des Mg-Gehalts führt.

Nach DE 11 83 058 ist die Granulierung von zuvor fast vollständig thermisch entwässertem Kieserit bekannt.

Auch der Einsatz von feuchten K₂SO₄-MgSO₄-Hydraten nach DE 21 06 212 sowie von künstlichem Langbeinit (K₂SO₄ · 2 MgSO₄) für Kalisalz-Kieserit-Mischungen nach DE 23 16 701 führen nicht zu einem Granulat, das den heutigen Qualitätsanforderungen gewachsen ist.

Die Anwendung von Ammoniumsulfat als Granulierhilfsmittel nach DE 27 48 152 bewirkt erst nach längerer Reifezeit eine ausreichende Verfestigung durch Hydratbildung. Außerdem wird durch den höheren Stickstoffgehalt die Ausbringzeit beschränkt.

Die Verwendung von Mono-, Di- und Polysachariden wird in DE 36 18 058 beschrieben.

Die Verwendung von Natrium- Kalium- und Ammoniumdihydrogenphosphaten, -hydrogenphosphaten und -phosphaten sowie von wasserlöslichem Calciumdihydrogenphosphat wird in DE 37 07 785 vorgeschlagen. Die zur Bildung eines stabilen Granulats benötigten Mengen sowie die zum Abbinden durch Hydratbildung im Granulat verbleibende Wassermenge führt zu einer entsprechend hohen Verminderung des Wertstoffgehalts.

Das Patent DE 43 03 984 beschreibt den synergetischen Effekt bei Mischung geringer Mengen mehrerer zuvor getesteter Granulierhilfsmittel. So erhält man unter Verwendung von Saccharosen (bzw. Melasse als Zuckerkomponente), Borax, Ammoniumchlorid, -sulfat, -dihydrogenphosphat oder -hydrogenphosphat sowie Stärke ein Granulat, das sich auf 0,5- 2 % Restfeuchtigkeit trocknen lässt und keine überhöhten Stickstoff- und Borwerte aufweist. Von Nachteil ist die erhöhte Feuchtigkeitsaufnahme bei relativen Luftfeuchtigkeiten größer 60 %, was zu einem Aufquellen des Korns und somit zu einer verminderten Lagerstabilität führt.

Der Einsatz von Alkalihydroxiden nach DE 43 03 985 führt zwar zu einem langsam reifenden Granulat, jedoch bewirken diese basischen Granulierhilfsmittel eine Bildung von wasserunlöslichem Magnesiumhydroxid, was zu einer zusätzlichen Verminderung des sofort pflanzenverfügbaren Magnesiums führt.

Die US-A-5019148 beschreibt homogene Mineralgranulate, die durch eine Säure-Base Reaktion hergestellt werden. Dabei werden anorganische Säuren wie zum Beispiel Schwefelsäure, Phosphorsäure oder auch organische Säuren wie zum Beispiel Oxalsäure, Buttersäure, Zitronensäure und basische Stoffe wie zum Beispiel Calciumcarbonat, Calciumoxid, Magnesiumoxid, Magnesiumcarbonat oder Ammonium-Alkalimetall-Hydroxide in einem rotierenden zylindrischen Behälter gemischt. Auf diese Weise reagieren die sauren und basischen Komponenten miteinander. Durch das ständige Rollen der entstehenden Reaktionsprodukte im Rotationsgefäß werden homogene Granalien mit Durchmessem von 0,03 bis 1 Millimeter gebildet. Die auf diese Weise gebildeten Granalien werden anschließend zu festen zementartigen Produkten ausgehärtet. Nach vorgenanntem Stand der Technik wird das zu granulierende Salz selbst durch die Reaktion von Säuren und basischen Stoffen hergestellt. Granulierhilfsmittel im Sinne der Erfindung werden nicht benötigt.

Für die heutigen Anforderungen der modernen Düngetechnik reicht entweder die Stabilität der nach dem Stand der Technik hergestellten Granulate nicht aus, war die Feuchtigkeitsabgabe in Bulk-Blends oder -aufnahme bei erhöhter Luftfeuchtigkeit zu groß, war der Magnesiumgehalt wegen zu großer oder löslichkeitssenkender Hilfsmittelzugaben zu gering oder war einfach der Kostenaufwand für das Granulierverfahren zu hoch.

Der vorliegenden Erfindung lag daher die Aufgabe zugrunde, ein geeignetes Granulierhilfsmittel zu finden, mit dem ein festes, hygroskopisch beständiges und möglichst nicht staubendes Mineraldüngergranulat insbesondere Kieseritgranulat erzeugt werden kann, ohne dass der sofort pflanzenverfügbare Magnesiumgehalt wesentlich verringert wird. Es wurde nun überraschend die sehr gute Wirkung von Chelatbildnem, also von koordinierend bzw. komplexierend wirkenden Reagenzien, als Granulierhilfsmittel gefunden. Hierbei handelt es sich um Verbindungen gemäß Patentanspruch 1. Als besonders geeignet erwiesen sich Dicarbonsäuren, Polycarbonsäuren (Oxalsäure, Malonsäure, Bernsteinsäure, Glutarsäure, Adipinsäure), Hydroxycarbonsäuren (Milchsäure, Äpfelsäure, Weinsäure, Citronensäure), Fruchtsäuren (Gluconsäure), Amidocarbonsäuren (Asparaginsäuren, Glutaminsäuren) und Polypeptide (Polyasparaginsäure), die nicht als reine Säuren, sondern in Form ihrer Salze, insbesondere Alkali, Erdalkali- oder Ammoniumsalze bzw. unter Neutralisation mit Alkali- oder Erdalkalibasen eingesetzt werden. Vorzugsweise wird Citronensäure in Form ihrer Alkali-, Erdalkali- oder Ammoniumsalze verwendet. Die Salze der genannten Carbonsäuren können sowohl einzeln, als auch im Gemisch zugegeben werden.

Diese Granulierhilfsmittel können in fester Form vor dem Granulieren dem fein zerteilten Dünger untergemischt werden, wobei während des Granulierens noch zusätzlich Wasser hinzugegeben werden kann. Ein Auflösen des Bindemittels in Wasser und anschließende Zugabe der Lösung zum Düngemittel vor und während des Granulierens ist ebenfalls durchführbar. Die Einsatzmenge dieser Bindemittel beträgt 0,1 - 5 Masse-% bezogen auf den eingesetzten Dünger.

Die erfindungsgemäßen Granulierhilfsmittel können erfolgreich sowohl bei der Aufbaugranulierung (Rollgranulierung) als auch bei der Kompaktierung (Pressgranulation) eingesetzt werden. Der Einsatz dieser Hilfsmittel bezieht sich insbesondere auf die Granutierung von Kieserit und anderen MgSO₄-haltigen Mineraldüngern. Die Erfindung ist jedoch nicht auf diese Mineraldünger beschränkt, sondern gleichermaßen wirkungsvoll bei der Granulierung anderer bekannter Mineraldünger einsetzbar. Beispielhaft sind Kaliumchlorid, Kaliumsulfat oder auch Mischungen von Kaliumchlorid und Kieserit, Kieserit und Kaliumsulfat aufgeführt.

Die erhaltenen Granulate zeichnen sich durch folgende Eigenschaften aus: hohe mechanische Stabilität, geringes Staubverhalten und hygroskopische Beständigkeit. Der sofort pflanzenverfügbare Magnesiumgehalt wird nicht negativ beeinflusst.

Die nachfolgenden Beispiele sollen die Erfindung näher erläutern.

### Ausführungsbeispiel 1:

### Aufbaugranulierung von Kieserit, Gemisch aus KCl und Kieserit oder Gemisch aus Kaliumsulfat und Kieserit

Die nachstehenden Versuchsergebnisse basieren auf Labor und Technikumsversuchen. Die Ergebnisse sind in den Tabellen 1 - 2 dargestellt. Die Granulierhilfsmittel werden in feinkörniger fester Form vor dem Granulieren einem feinen Frischgut/Rückgut-Gemisch des Düngemittels untergemischt oder aufgelöst in Wasser direkt auf den Granulierteller oder in die Granuliertrommel auf- bzw. eingespritzt. Die Gesamteinsatzmenge der Granulierhilfsmittel beträgt 0,1 - 5 Gew.-% bezogen auf die eingesetzte Frischgutmenge des Düngemittels.

### Laborversuche

Für die einzelnen Versuche wurden jeweils 800 g eines Mineraldüngers oder Mineraldüngergemisches eingesetzt. Sofern Kieserit granuliert wurde, lag dieser in zwei aufbereiteten Qualitäten vor: Kieserit M = gemahlener ESTA-Kieserit der Körnung d₅₀ = 0,04 mm sowie Kieserit E = ungemahlener feiner ESTA-Kieserit der Kömung d₅₀ = 0,38 mm aus einer elektrostatischen Trennanlage. Die Ausgangsstoffe wurden mit dem jeweiligen Granulierhilfsmittel und der -flüssigkeit in einem Lödige-Mischer 3 min. intensiv vermengt und auf einem Laborteller (Durchmesser: 40 cm) unter Bedüsen mit Wasser bzw. der Granulierflüssigkeit granuliert.

Die Bestimmung der Grünfeuchte erfolgte rechnerisch. Die erhaltenen Grünpellets wurden anschließend im Trockenschrank getrocknet und die Qualitätsparameter bestimmt. Die Restfeuchte wurde durch Messung des Gewichtsverlustes beim 2-stündigen Erhitzen bei 105° C im Trockenschrank ermittelt.

Die Werte für Abrieb und Druckfestigkeit wurden an Granalien der Fraktion 2,5 - 3,15 mm gemessen. Für die Bestimmung des Abriebes wurde der Bush-Test durchgeführt. Die Berstfeste wurde mit einem Erweka-Gerät gemessen.

### Technikumsversuche

Die aus zwei separaten Silos eingespeisten Einsatzstoffe (Kieserit E bzw. Kieserit M) wurden in einem Doppelwellengranulator mit dem in einem Rührbehälter bereiteten bzw. bereitgestellten Granulierhilfsmittel vermischt und einem Granulierteller (Durchmesser: 100 cm) aufgegeben. Hier erfolgte die Zugabe der Granulierflüssigkeit aus einem separaten Rührbehälter. Außerdem wurde Wasser nach Augenschein über eine Düse zugegeben. Dies war erforderlich zur Gewinnung einer möglichst konstanten Körnung von 2 - 4 mm. Im Gegensatz zu den übrigen Stoffströmen wurde dieser nicht konstanteingestellt.

Die Grünpellets verweilten auf Förderbändern und in unbeheizten Reifetrommeln. In einem gewöhnlichen Prallbrecher/Sieb- Kreislauf erfolgte die Abtrennung der Gutkomfraktion. Das angefallene Rückgut wurde über ein Silo dem Doppelwellengranulator zugeführt, ebenso die Stäube. Da in der Praxis Kieserit M kalt vorliegt und der Kieserit E warm aus einer ESTA-Anlage wurde im Technikumsversuch der Kieserit E über ein Fließbett aufgewärmt, um die großtechnische Praxis nachzubilden.

Folgende feste Anlagenparameter sind anzuführen:

| | | |
|---|---|---|
| Reifung: | 1. Förderband | < 1 min |
| | 1. Reifetrommel | ca. 2 min |
| | Reifeband | ca. 8 min |
| | 2. Reifetrommel | ca. 20 min |

| | | |
|---|---|---|
| Siebschnitte des Pralibrecher/Sieb-Kreislaufs | Überkorn | 8.5 x 8.5 mm |
| | | 7.1 x 7.1 mm |
| | | 5.6 x 5.6 mm |
| | Gutkorn | 3.55 x 3.55 mm |
| | | 3.15 x 3.15 mm |
| | Unterkorn | < 3.15 mm |

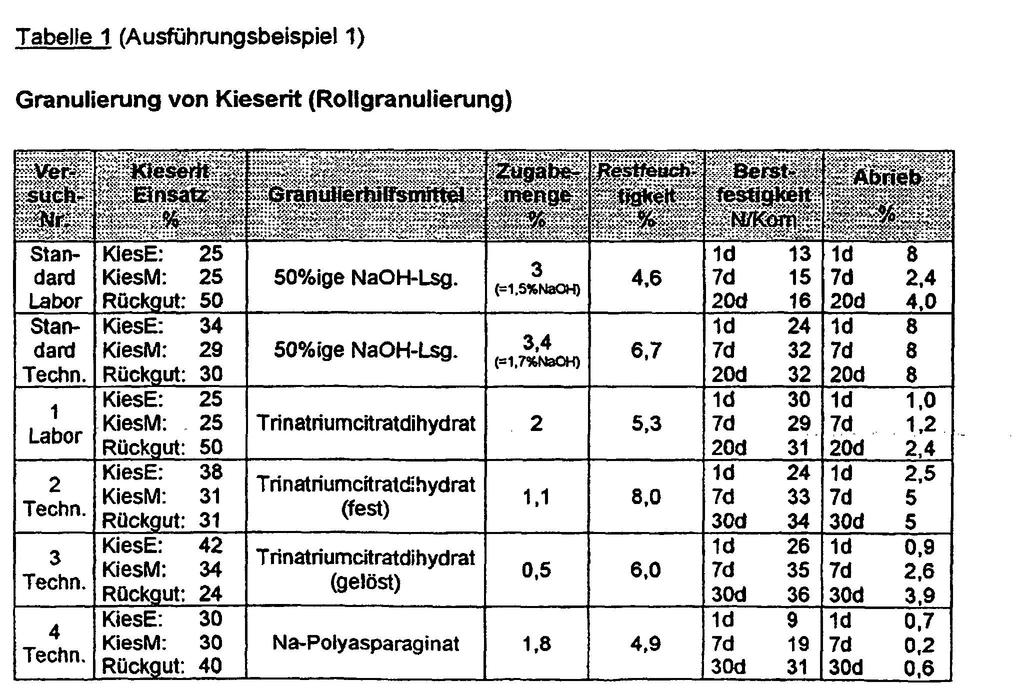

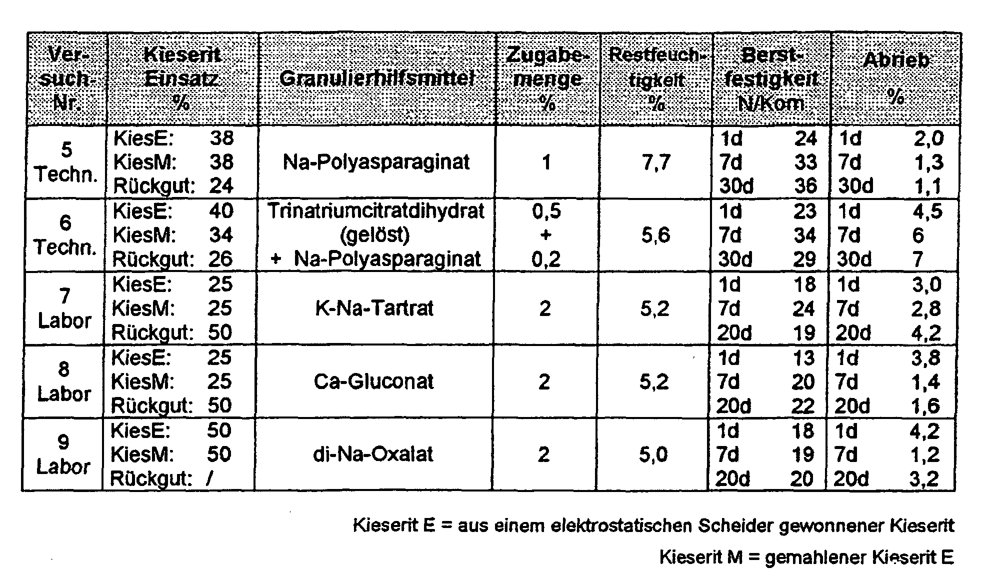

Der Vergleich der erfindungsgemäßen Versuchsreihen mit dem Standardversuch zeigt eine signifikante Verbesserung der Abriebswerte, die Granulate sind stabiler. Im Standardversuch kam 50 %-ige NaOH-Lösung nach bisheriger Praxis des Standes der Technik der Kieseritrollgranulierung zum Einsatz. Die Berstfestigkeit konnte durch Einsatz der erfindungsgemäßen Granulierhilfsmittel im wesentlichen ebenfalls erhöht werden.

Neben dieser Verbesserung der mechanischen Qualität des Granulats ist im Vergleich zum Standardversuch durch den Einsatz der Chelatbildner kein Verlust des sofort pflanzenverfügbaren Magnesiums durch die Bildung von unlöslichem Magnesiumhydroxid feststellbar. Die gewünschten Verbesserungen werden insbesondere durch Trinatriumcitratdihydrat erzielt, so dass dieses Granulierhilfsmittel bevorzugt wird.

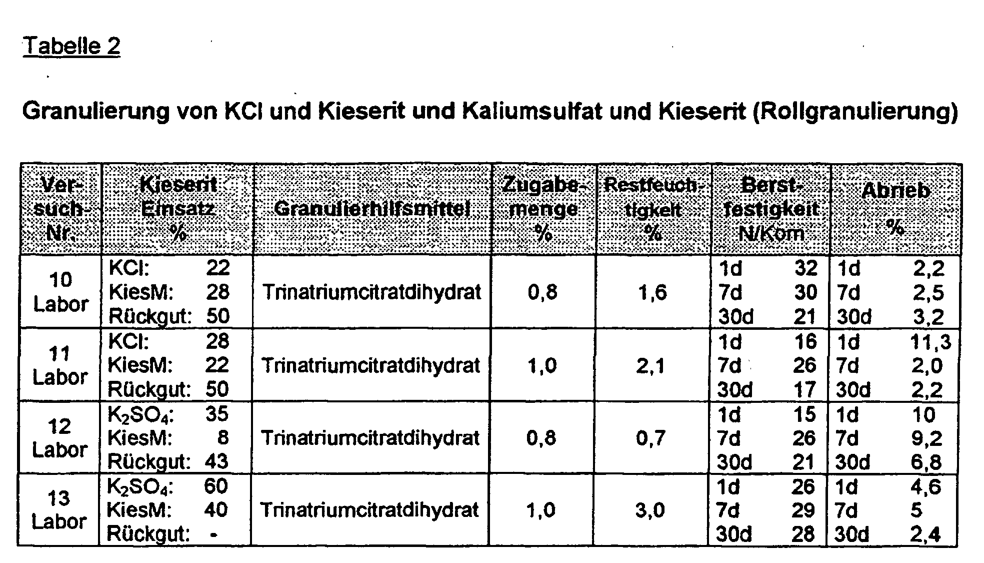

Es wird nachgewiesen, dass bei Einsatz von z.B. Trinatriumcitratdihydrat vergleichbare sehr gute Granulatqualitäten auch bei anderen Mehrkomponenten-Düngern erzielt werden können.

### Ausführungsbeispiel 2:

### Pressgranulierung von KCI oder Gemisch aus Kaliumsulfat und Kieserit

Die Mischung der jeweiligen Ausgangsstoffe mit dem Granulierhilfsmittel in Anteilen von 0,1 - 5 Gew.-% wurde aus dem Aufgabesilo einer Walzenpresse zugeführt. Es wurde mit einem Druck von 160 bar gepresst und ca. 1,5 % Feuchte durch Dampfeinblasung zugesetzt. Der anfallende Rückstrom wurde mit dem Frischgut vermischt und wieder auf die Presse aufgegeben.

Das in der Anlage eingesetzte Mehrdecksieb wies folgende Siebbespannungen auf:
8,5 mm
5,0 mm
3,55 mm
3,15 mm
2,0 mm.

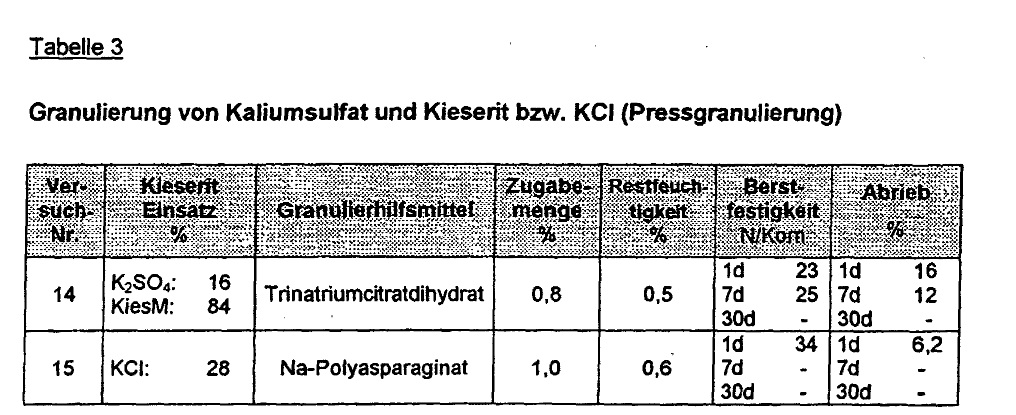

Die hervorragende Eignung der Carbonsäuresalze als Granulierhilfsmittel ist gleichermaßen bei der Pressgranulierung der bekannten Mineraldünger zu beobachten.

## Patentansprüche

1. Verwendung von Alkali-, Erdalkali- oder Ammoniumsalzen der Citronensäure und/oder der Asparaginsäure oder der Oxalsäure oder der Weinsäure oder der Gluconsäure in Mengen von 0,1 bis 5 Masse % bezogen auf die Primärmasse an zu granulierendem Mineraldüngemittel als Granulierhilfsmittel bei der Granulierung von Kieserit, Kaliumsulfat oder Kaliumchlorid oder Gemischen aus diesen Mineraldüngern.

2. Verwendung nach Anspruch 1, **gekennzeichnet dadurch, dass** insbesondere Alkali-, Erdalkali- oder Ammoniumsalze der Citronensäure eingesetzt werden.

3. Verwendung nach Anspruch 1, **gekennzeichnet dadurch, dass** vorzugsweise Natriumcitratdihydrat eingesetzt wird.

4. Verwendung nach Anspruch 1, **gekennzeichnet dadurch, dass** das Granulierhilfsmittel entweder in fester Form oder nach Auflösen in Wasser als Lösung vor und/oder während des Granulierens eingesetzt wird.

## Claims

1. Use of alkali metal, alkaline earth metal or ammonium salts of citric acid and/or aspartic acid or oxalic acid or tartaric acid or gluconic acid in amounts of from 0.1 to 5% by mass with respect to the primary mass of mineral fertiliser to be granulated as a granulating aid in the granulation of kieserite, potassium sulphate or potassium chloride or mixtures of those mineral fertilisers.

2. Use according to claim 1 **characterised in that** in particular alkali metal, alkaline earth metal or ammonium salts of citric acid are used.

3. Use according to claim 1 **characterised in that** preferably sodium citrate dihydrate is used.

4. Use according to claim 1 **characterised in that** the granulating aid is used either in solid form or after being dissolved in water as a solution prior to and/or during the granulating operation.

## Revendications

1. Utilisation de sels de métal alcalin, de métal alcalino-terreux ou d'ammonium de l'acide citrique et/ou de l'acide aspartique ou de l'acide oxyalique ou de l'acide tartrique ou de l'acide gluconique en des quantités de 0,1 à 5 % en masse rapportées à la masse primaire d'engrais minéral à granuler, en tant qu'adjuvant de granulation lors de la granulation de kisérite, de sulfate de potassium ou de chlorure de potassium ou de mélanges de ces engrais minéraux.

2. Utilisation suivant la revendication 1, **caractérisé en ce que** on utilise notamment des sels de métal alcalin, de métal alcalino-terreux ou d'ammonium, de l'acide citrique.

3. Utilisation suivant la revendication 1, **caractérisé en ce que** l'on utilise, de préférence, du citrate de sodium dihydraté.

4. Utilisation suivant la revendication 1, **caractérisée en ce que** l'on utilise l'adjuvant de granulation sous forme solide ou après dissolution dans de l'eau sous forme de solution avant et/ ou pendant la granulation.
